# EUROPÄISCHE PATENTSCHRIFT

(11) **EP 3 390 169 B1**
(45) Veröffentlichungstag und Bekanntmachung des Hinweises auf die Patenterteilung: **05.05.2021**
(21) Anmeldenummer: 16750798.7
(22) Anmeldetag: 08.08.2016
(51) Int. Cl.: B60R 25/24, G07C 9/00

(54) **AUTORISIERUNG DER NUTZUNG EINES KRAFTFAHRZEUGS**
AUTHORIZING THE USE OF A MOTOR VEHICLE
AUTORISATION D'UTILISATION D'UN VÉHICULE À MOTEUR

(30) Priorität: 18.12.2015 DE 102015016557
(43) Veröffentlichungstag der Anmeldung: 24.10.2018
(73) Patentinhaber: Bayerische Motoren Werke Aktiengesellschaft, 80809 München (DE)
(72) Erfinder: HEINBOCKEL, Stefan, 81735 München (DE); WAGATHA, Helmut, 85764 Oberschleissheim (DE); HOCKE, Fredrik, 80336 München (DE); WISTORF, Ralf, 81737 München (DE)
(86) Internationale Anmeldenummer: PCT/EP2016/068886
(87) Internationale Veröffentlichungsnummer: WO 2017/102106

(56) Entgegenhaltungen:
- EP-A1- 1 403 653
- EP-A2- 0 867 971
- EP-A2- 1 184 236
- EP-A2- 2 498 226
- DE-A1-102011 079 421
- DE-B3-102005 013 910
- US-A1- 2013 063 247

## Beschreibung

Die Erfindung betrifft insbesondere ein Verfahren zur Autorisierung der Nutzung eines Kraftfahrzeugs, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist. Bei dem Kraftfahrzeug handelt es sich vorzugsweise um ein zwei- oder vierrädriges Kraftfahrzeug. Ein bekanntes Verfahren ist in DE 10 2011 079 421 A1 offenbart.

Bei einem solchen bekannten Verfahren ist es wünschenswert, dieses gegen Manipulationen weiter zu verbessern.

Die Aufgabe der Erfindung besteht insbesondere in der Bereitstellung eines Verfahrens zur Autorisierung der Nutzung eines Kraftfahrzeugs mit einem verbesserten Schutz gegen Manipulationen.

Diese Aufgabe wird insbesondere durch ein Verfahren zur Autorisierung der Nutzung eines Kraftfahrzeugs mit den Merkmalen des unabhängigen Verfahrensanspruchs gelöst. Vorteilhafte Ausgestaltungen des erfindungsgemäßen Verfahrens sind Gegenstand der abhängigen Verfahrensansprüche.

Das erfindungsgemäße Verfahren geht aus von einem Verfahren zur Autorisierung der Nutzung eines Kraftfahrzeugs, insbesondere ein zwei - oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist. Dieses bekannte Verfahren wird erfindungsgemäß durch die folgenden Schritte weitergebildet.

In einem ersten Schritt sendet die erste Fahrzeugantenne ein erstes Signal aus, das von der Identifikationsgeber-Antenne empfangen wird.

In einem zweiten Schritt ermittelt der Identifikationsgeber zumindest eine der räumlichen Komponenten des ersten elektromagnetischen Feldes des empfangenen ersten Signals, vorzugsweise unter Verwendung eines winkelauflösenden Magnetfeldsensors.

In einem dritten Schritt sendet die zweite Fahrzeugantenne ein zweites Signal aus, das von der Identifikationsgeber-Antenne empfangen wird.

In einem vierten Schritt ermittelt der Identifikationsgeber zumindest eine der räumlichen Komponenten des zweiten elektromagnetischen Feldes des empfangenen zweiten Signals, vorzugsweise unter Verwendung eines winkelauflösenden Magnetfeldsensors.

In einem fünften Schritt ermittelt ein erster Rechner, vorzugsweise ein Rechner in dem Identifikationsgeber, wiederholt nach dem Ablauf eines vorbestimmten ersten Zeitintervalls den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals.

In einem sechsten Schritt ermittelt der Identifikationsgeber wiederholt nach Ablauf eines vorbestimmten Zeitintervalls, vorzugsweise des vorbestimmten ersten Zeitintervalls, die Feldstärke zumindest des ersten elektromagnetischen Feldes des empfangenen ersten Signals und vorzugsweise wiederholt auch die Feldstärke des zweiten elektromagnetischen Feldes des empfangenen zweiten Signals wobei die Ermittlung der Feldstärken vorzugsweise unter Zuhilfenahme des ersten Rechners vorgenommen wird.

In einem siebten Schritt sendet der Identifikationsgeber nur dann ein Autorisierungssignal zur Autorisierung der Nutzung des Kraftfahrzeugs an das Kraftfahrzeug, wenn kumulativ die folgenden Voraussetzungen erfüllt werden:
- der jeweils nach dem Ablauf des vorbestimmten ersten Zeitintervalls wiederholt ermittelte Winkel überschreitet einen vorbestimmten Schwellenwert,
- der wiederholt ermittelte Winkel nimmt zu bzw. wird größer, und/oder
- die wiederholt gemessene Feldstärke des ersten und/oder zweiten elektromagnetischen Feldes nimmt ebenfalls zu bzw. wird größer.

Zusammenfassend besteht ein Aspekt des erfindungsgemäßen Verfahrens in der Ermittlung, ob sich der Identifikationsgeber auf das Kraftfahrzeug zubewegt. Dies kann erfindungsgemäß zum einen festgestellt werden, indem der Identifikationsgeber wiederholt die Feldstärke der Signale, die von dem Kraftfahrzeug ausgesandt werden, ermittelt und überprüft, ob die Feldstärke bzw. die Feldstärken zunimmt bzw. zunehmen. Dies kann erfindungsgemäß zum anderen festgestellt werden, indem der Identifikationsgeber wiederholt den Winkel zwischen den von dem Kraftfahrzeug ausgesandten Signalen bestimmt und überprüft, ob die wiederholt bestimmten Winkel zunehmen.

Bei einer bevorzugten Ausführungsform des erfindungsgemäßen Verfahrens ist vorgesehen, dass im Kraftfahrzeug wiederholt der ermittelte und zum Kraftfahrzeug übertragene Winkel jeweils mit einem entsprechenden Zeitstempel versehen und gespeichert wird, um ein Referenz-Winkel-Muster zum Vergleich mit später ermittelten Winkel-Mustern zu bilden und nur bei positivem Mustervergleich ein Autorisierungssignal zur Autorisierung der Nutzung des Kraftfahrzeugs bereitzustellen.

Durch diese Maßnahme kann der Schutz vor Manipulationen weiter erhöht werden.

Bei einer weiteren bevorzugten Ausführungsform des erfindungsgemäßen Verfahrens ist vorgesehen, dass im Kraftfahrzeug wiederholt die gemessene bzw. ermittelte und zum Kraftfahrzeug übertragene Feldstärke jeweils mit einem entsprechenden Zeitstempel versehen und gespeichert wird, um ein Referenz-Feldstärke-Muster zum Vergleich mit später ermittelten Feldstärke-Mustern zu bilden und nur bei positivem Mustervergleich ein Autorisierungssignal zur Autorisierung der Nutzung des Kraftfahrzeugs bereitzustellen.

Die vorstehenden optionalen Maßnahmen können in vorteilhafter Weise alternativ oder in Kombination zur Erhöhung des Schutzes des erfindungsgemäßen Verfahrens vor Manipulationen verwendet werden.

Entsprechend einer vorteilhaften Ausgestaltung des erfindungsgemäßen Verfahrens wird der Zeitabstand zwischen der Aussendung des ersten Signals durch die erste Kraftfahrzeugantenne und der Aussendung des zweiten Signals durch die zweite Kraftfahrzeugantenne zeitlich so kurz - aber verschieden von Null - gewählt wird, dass der von dem Fahrer mitgeführte Identifikationsgeber beim Zugehen des Fahrers auf das Kraftfahrzeug weitgehend nicht bewegt wird. Daher wird die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar.

Bei einer Ausführungsform des erfindungsgemäßen Verfahrens ist vorgesehen, dass das Kraftfahrzeug eine weitere, dritte Antenne aufweist, die von der ersten und der zweiten Antenne jeweils räumlich beabstandet ist. In analoger bzw. gleicher Weise wird der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt.

Die vorstehenden Maßnahmen ermöglichen eine weitere Verbesserung der Sicherheit des erfindungsgemäßen Verfahrens gegen Manipulationen.

Bei einer Weiterbildung des erfindungsgemäßen Verfahrens ist vorgesehen, dass die von dem Identifikationsgeber ermittelten räumlichen Komponenten des ersten elektromagnetischen Feldes des empfangenen ersten Signals die x-, y- und z-Komponenten des elektromagnetischen Feldes eines ersten kartesischen Koordinatensystems sind.

Bei einer Ausführungsform des erfindungsgemäßen Verfahrens sind die von dem Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem. Weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

Entsprechend einer Weiterbildung des erfindungsgemäßen Verfahrens sind die von dem Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems.

Bei einer Ausführungsform des erfindungsgemäßen Verfahrens ist vorgesehen, dass mindestens ein erster Vektor aus den von dem Identifikationsgeber ermittelten x-, y- und z-Komponenten des ersten elektromagnetischen Feldes des empfangenen ersten Signals und ein zweiter Vektor aus den von dem Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

Bei einer bevorzugten Ausgestaltung des erfindungsgemäßen Verfahrens ist vorgesehen, dass mithilfe des Skalarprodukts rechnerisch der Winkel zwischen den beiden Vektoren bestimmt wird.

Durch die vorstehenden Maßnahmen wird erreicht, dass nur eine geringe Prozessorleistung zur Berechnung der Winkel erforderlich ist.

Entsprechend einer bevorzugten Weiterbildung des erfindungsgemäßen Verfahrens ist vorgesehen, dass der ermittelte Winkel einen vorbestimmten Schwellenwert von weitgehend Null Grad überschreitet. Insbesondere ist ein Schwellenwert, insbesondere ein Schwellenwert größer als 1 bis 10 Grad, vorzugsweise 1 bis 5 Grad, vorgesehen.

Bei einer weiteren Ausgestaltung des erfindungsgemäßen Verfahrens wird der Schwellenwert, der größer als Null Grad ist, mit geringer werdender Entfernung des Identifikationsgebers von dem Kraftfahrzeug vergrößert. Die Entfernung wird vorzugsweise über eine Laufzeitmessung zwischen den Signalen, die zwischen Kraftfahrzeug und Identifikationsgeber ausgetauscht werden, bestimmt.

Entsprechend einer besonders bevorzugten Ausführungsform des erfindungsgemäßen Verfahrens ist vorgesehen, dass die erste, zweite und/oder dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

Durch die vorstehenden Maßnahmen kann die Sicherheit des erfindungsgemäßen Verfahrens zur Autorisierung der Nutzung eines Kraftfahrzeugs zusätzlich verbessert werden.

Die Erfindung schlägt zusätzlich ein vorteilhaftes Kraftfahrzeugzugangssystem vor, bei dem die Ausführung mindestens eines Schritts des erfindungsgemäßen Verfahrens vorgesehen ist.

Entsprechend einer vorteilhaften Weiterbildung des erfindungsgemäßen Kraftfahrzeugzugangssystems ist der Identifikationsgeber ein Funkschlüssel oder ein Smartphone, wobei das Smartphone vorzugsweise mit einer Identifikationsgeber-Softwareanwendung, wie eine sog. App, versehen ist.

Bei einer anderen vorteilhaften Ausgestaltung des erfindungsgemäßen Kraftfahrzeugzugangssystems ist vorgesehen, dass der Identifikationsgeber ein mit einem Rechnerchip versehenes Smartphone, ein mit einem Rechnerchip versehener Funk-Kraftfahrzeugschlüssel oder eine Chipkarte mit Rechnerchip ist.

Schließlich ist bei einer weiteren vorteilhaften Ausführungsform des erfindungsgemäßen Kraftfahrzeugzugangssystems vorgesehen, dass der Identifikationsgeber einen Sensor zur Bestimmung bzw. Ermittlung eines elektromagnetischen Feldes und/oder der Komponenten des elektromagnetischen Feldes aufweist, das von einer oder mehreren Kraftfahrzeugantennen im Bereich des Identifikationsgebers erzeugt worden ist.

An den erfindungsgemäßen Fahrzeugzugangssystem ist insbesondere von Vorteil, dass diese kostengünstig und dennoch zuverlässig gegen Manipulationen bereitgestellt werden können.

Weiter wird eine erfindungsgemäße Wegfahrsperre vorgeschlagen, bei der die Ausführung des erfindungsgemäßen Verfahrens vorgesehen ist.

Zudem wird ein Kraftfahrzeug mit einer erfindungsgemäßen Wegfahrsperre vorgeschlagen, bei dem die Ausführung des erfindungsgemäßen Verfahrens vorgesehen ist.

Schließlich schlägt die Erfindung ein Computerprogrammprodukt zur Steuerung mindestens eines Prozessors vor, der den Ablauf des erfindungsgemäßen Verfahrens bewirkt.

## Patentansprüche

1. Verfahren zur Autorisierung der Nutzung eines Kraftfahrzeugs, insbesondere ein zwei - oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist, mit den folgenden Schritten:
- die erste Kraftfahrzeugantenne sendet ein erstes Signal aus, das von der Identifikationsgeber-Antenne empfangen wird,
- der Identifikationsgeber ermittelt zumindest eine der räumlichen Komponenten des ersten elektromagnetischen Feldes des empfangenen ersten Signals, insbesondere unter Verwendung eines winkelauflösenden Magnetfeldsensors
- die zweite Kraftfahrzeugantenne sendet ein zweites Signal aus, das von der Identifikationsgeber-Antenne empfangen wird,
- der Identifikationsgeber ermittelt zumindest eine der räumlichen Komponenten des zweiten elektromagnetischen Feldes des empfangenen zweiten Signals, insbesondere unter Verwendung eines winkelauflösenden Magnetfeldsensors,
- ein erster Rechner, insbesondere ein Rechner im Identifikationsgeber, ermittelt wiederholt nach dem Ablauf eines vorbestimmten ersten Zeitintervalls den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals,
- der Identifikationsgeber ermittelt wiederholt nach dem Ablauf eines vorbestimmten Zeitintervalls, insbesondere des vorbestimmten ersten Zeitintervalls, die Feldstärke zumindest des ersten elektromagnetischen Feldes des empfangenen ersten Signals und insbesondere wiederholt auch die Feldstärke des zweiten elektromagnetischen Feldes des empfangenen zweiten Signals, wobei die Ermittlung der Feldstärken insbesondere unter Zuhilfenahme des ersten Rechners vorgenommen wird,
- der Identifikationsgeber sendet nur dann ein Autorisierungssignal zur Autorisierung der Nutzung des Kraftfahrzeugs an das Kraftfahrzeug, wenn kumulativ die folgenden Voraussetzungen erfüllt werden:
- der jeweils nach dem Ablauf des vorbestimmten ersten Zeitintervalls wiederholt ermittelte Winkel überschreitet einen vorbestimmten Schwellenwert,
- der wiederholt ermittelte Winkel nimmt zu bzw. wird größer, und/oder
- die wiederholt gemessene Feldstärke des ersten und/oder zweiten elektromagnetischen Feldes nimmt ebenfalls zu bzw. wird größer.

2. Verfahren zur Autorisierung der Nutzung eines Kraftfahrzeugs nach Anspruch 1, **dadurch gekennzeichnet, dass** im Kraftfahrzeug wiederholt der ermittelte und zum Kraftfahrzeug übertragene Winkel jeweils mit einem entsprechenden Zeitstempel versehen und gespeichert wird, um ein Referenz-Winkel-Muster zum Vergleich mit später ermittelten Winkel-Mustern zu bilden und nur bei positivem Mustervergleich ein Autorisierungssignal zur Autorisierung der Nutzung des Kraftfahrzeugs bereitzustellen.

3. Verfahren nach einem der vorstehenden Ansprüche, **dadurch gekennzeichnet, dass** im Kraftfahrzeug wiederholt die gemessene bzw. ermittelte und zum Kraftfahrzeug übertragene Feldstärke jeweils mit einem entsprechenden Zeitstempel versehen und gespeichert wird, um ein Referenz-Feldstärke-Muster zum Vergleich mit später ermittelten Feldstärke-Mustern zu bilden und nur bei positivem Mustervergleich ein Autorisierungssignal zur Autorisierung der Nutzung des Kraftfahrzeugs bereitzustellen.

4. Verfahren zur Autorisierung der Nutzung eines Kraftfahrzeugs nach einem der vorstehenden Ansprüche, **dadurch gekennzeichnet, dass** der Zeitabstand zwischen der Aussendung des ersten Signals durch die erste Kraftfahrzeugantenne und der Aussendung des zweiten Signals durch die zweite Kraftfahrzeugantenne zeitlich so kurz, aber verschieden von Null, gewählt wird, dass der von dem Fahrer mitgeführte Identifikationsgeber beim Zugehen des Fahrers auf das Kraftfahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird.

5. Verfahren zur Autorisierung der Nutzung eines Kraftfahrzeugs nach einem der vorstehenden Ansprüche, **dadurch gekennzeichnet, dass** das Kraftfahrzeug eine weitere, dritte Antenne aufweist, die von der ersten und der zweiten Antenne jeweils räumlich beabstandet ist und dass in analoger bzw. gleicher Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

6. Verfahren zur Autorisierung der Nutzung eines Kraftfahrzeugs nach einem der vorstehenden Ansprüche, **dadurch gekennzeichnet, dass** die von dem Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

7. Verfahren zur Autorisierung der Nutzung eines Kraftfahrzeugs nach einem der vorstehenden Ansprüche, **dadurch gekennzeichnet, dass** die von dem Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

8. Verfahren zur Autorisierung der Nutzung eines Kraftfahrzeugs nach einem der vorstehenden Ansprüche, **dadurch gekennzeichnet, dass** die von dem Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

9. Verfahren zur Autorisierung der Nutzung eines Kraftfahrzeugs nach einem der vorstehenden Ansprüche, **dadurch gekennzeichnet, dass** mindestens ein erster Vektor aus den von dem Identifikationsgeber ermittelten x-, y- und z-Komponenten des ersten elektromagnetischen Feldes des empfangenen ersten Signals und ein zweiter Vektor aus den von dem Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

10. Verfahren zur Autorisierung der Nutzung eines Kraftfahrzeugs nach einem der vorstehenden Ansprüche, **dadurch gekennzeichnet, dass** mithilfe des Skalarprodukts rechnerisch der Winkel zwischen den beiden Vektoren bestimmt wird.

11. Verfahren zur Autorisierung der Nutzung eines Kraftfahrzeugs nach einem der vorstehenden Ansprüche, **dadurch gekennzeichnet, dass** der ermittelte Winkel einen vorbestimmten Schwellenwert von weitgehend Null Grad überschreitet, insbesondere ein Schwellenwert größer als 1 bis 10 Grad, insbesondere 1 bis 5 Grad.

12. Verfahren zur Autorisierung der Nutzung eines Kraftfahrzeugs nach Anspruch 11, **dadurch gekennzeichnet, dass** der Schwellenwert, der größer als Null Grad ist, mit geringer werdender Entfernung des Identifikationsgebers von dem Kraftfahrzeug vergrößert wird, wobei die Entfernung insbesondere über eine Laufzeitmessung zwischen den Signalen, die zwischen Kraftfahrzeug und Identifikationsgeber ausgetauscht werden, bestimmt wird.

13. Verfahren zur Autorisierung der Nutzung eines Kraftfahrzeugs nach einem der vorstehenden Ansprüche, **dadurch gekennzeichnet, dass** die erste, zweite und dritte Antenne jeweils auf einer gleichen oder unterschiedlichen Frequenz im Frequenzbereich von 20 kHz bis 140 kHz, insbesondere auf ca. 125 kHz, insbesondere zeitlich versetzt, senden.

14. Kraftfahrzeugzugangssystem zur Autorisierung der Nutzung eines Kraftfahrzeugs, mit einer ersten und einer zweiten Antenne, einem ersten Rechner und einem Identifikationsgeber, in dem das Kraftfahrzeugzugangssystem geeignet ist, ein Verfahren nach einem der Ansprüche 1-13 auszuführen.

15. Kraftfahrzeugzugangssystem zur Autorisierung der Nutzung eines Kraftfahrzeugs nach Anspruch 14, **dadurch gekennzeichnet, dass** der Identifikationsgeber ein Funkschlüssel oder ein Smartphone ist, wobei das Smartphone insbesondere mit einer Identifikationsgeber-Softwareanwendung, wie eine sog. App, versehen ist.

16. Kraftfahrzeugzugangssystem zur Autorisierung der Nutzung eines Kraftfahrzeugs nach Anspruch 15, **dadurch gekennzeichnet, dass** der Identifikationsgeber ein mit einem Rechnerchip versehenes Smartphone, ein mit einem Rechnerchip versehener Funk-Kraftfahrzeugschlüssel oder eine Chipkarte mit Rechnerchip ist.

17. Kraftfahrzeugzugangssystem zur Autorisierung der Nutzung eines Kraftfahrzeugs nach Anspruch 15 oder 16, **dadurch gekennzeichnet, dass** der Identifikationsgeber einen Sensor zur Bestimmung bzw. Ermittlung eines elektromagnetischen Feldes und/oder der Komponenten des elektromagnetischen Feldes aufweist, das von einer oder mehreren Kraftfahrzeugantennen im Bereich des Identifikationsgebers erzeugt worden ist.

18. Wegfahrsperre zur Autorisierung der Nutzung eines Kraftfahrzeugs, mit einer ersten und einer zweiten Antenne, einem ersten Rechner und einem Identifikationsgeber, in dem die Wegfahrsperre geeignet ist, ein Verfahren nach einem der Ansprüche 1-13 auszuführen.

19. Kraftfahrzeug mit einer Wegfahrsperre zur Autorisierung der Nutzung eines Kraftfahrzeugs, mit einer ersten und einer zweiten Antenne, einem ersten Rechner und einem Identifikationsgeber, in dem das Kraftfahrzeug geeignet ist, ein Verfahren nach einem der Ansprüche 1-13 auszuführen.

20. Computerprogrammprodukt zur Autorisierung der Nutzung eines Kraftfahrzeugs, umfassend Befehle, die bewirken, dass das Fahrzeugzugangssystem des Anspruchs 14 die Verfahrensschritte nach einem der Ansprüche 1-13 ausführt.

## Claims

1. Method for authorizing the use of a motor vehicle, in particular a two- or four-wheeled motor vehicle, that has at least one first and one second antenna, wherein the first antenna and the second antenna are at a physical distance from one another, by means of a portable identification transmitter that has an identification transmitter antenna, having the following steps:
- the first motor vehicle antenna emits a first signal that is received by the identification transmitter antenna,
- the identification transmitter detects at least one of the spatial components of the first electromagnetic field of the received first signal, in particular using an angle-resolving magnetic field sensor,
- the second motor vehicle antenna emits a second signal that is received by the identification transmitter antenna,
- the identification transmitter detects at least one of the spatial components of the second electromagnetic field of the received second signal, in particular using an angle-resolving magnetic field sensor,
- a first computer, in particular a computer in the identification transmitter, repeatedly detects, after a predetermined first time interval has elapsed, the angle at least between the detected spatial component of the first electromagnetic field of the received first signal and the detected spatial component of the second electromagnetic field of the received second signal,
- the identification transmitter repeatedly detects, after a predetermined time interval, in particular the predetermined first time interval, has elapsed, the field strength of at least the first electromagnetic field of the received first signal and, in particular repeatedly, also the field strength of the second electromagnetic field of the received second signal, wherein the detection of the field strengths is in particular performed using the first computer,
- the identification transmitter sends an authorization signal for authorizing the use of the motor vehicle to the motor vehicle only if the following prerequisites are cumulatively met:
- the angle repeatedly detected each time after the predetermined first time interval has elapsed exceeds a predetermined threshold value,
- the repeatedly detected angle increases or becomes greater, and/or
- the repeatedly measured field strength of the first and/or second electromagnetic field likewise increases or becomes greater.

2. Method for authorizing the use of a motor vehicle according to Claim 1, **characterized in that**, in the motor vehicle, the detected angle transmitted to the motor vehicle is repeatedly provided with an applicable timestamp each time and stored, in order to form a reference angle pattern for comparison with angle patterns detected later and to provide an authorization signal for authorizing the use of the motor vehicle only in the event of a positive pattern comparison.

3. Method according to either of the preceding claims, **characterized in that**, in the motor vehicle, the measured or detected field strength transmitted to the motor vehicle is repeatedly provided with an applicable timestamp each time and stored, in order to form a reference field strength pattern for comparison with field strength patterns detected later and to provide an authorization signal for authorizing the use of the motor vehicle only in the event of a positive pattern comparison.

4. Method for authorizing the use of a motor vehicle according to one of the preceding claims, **characterized in that** the interval of time between the emission of the first signal by the first motor vehicle antenna and the emission of the second signal by the second motor vehicle antenna is chosen to be so brief - but different from zero - that the identification transmitter carried by the driver is largely not moved when the driver approaches the motor vehicle, and therefore the detection of the angle at least between the detected spatial component of the first electromagnetic field of the received first signal and the detected spatial component of the second electromagnetic field of the received second signal is largely not distorted, or does not become unusable, as a result of the movement of the driver, or as a result of the associated movement of the identification transmitter.

5. Method for authorizing the use of a motor vehicle according to one of the preceding claims, **characterized in that** the motor vehicle has a further, third antenna that is at a physical distance from each of the first and the second antenna and **in that** the angle at least between the detected spatial component of the first electromagnetic field of the received first signal and the detected spatial component of the third electromagnetic field of a third signal emitted by the third antenna and received by the identification transmitter is determined in analogous or identical fashion.

6. Method for authorizing the use of a motor vehicle according to one of the preceding claims, **characterized in that** the spatial components of the first electromagnetic field of the received first signal that are detected by the identification transmitter are the x, y and z components of the electromagnetic field of a first Cartesian coordinate system.

7. Method for authorizing the use of a motor vehicle according to one of the preceding claims, **characterized in that** the spatial components of the second electromagnetic field of the received second signal that are detected by the identification transmitter, the x, y and z components of the electromagnetic field, are largely the components with reference to the first Cartesian coordinate system, largely because the Cartesian coordinate system or reference system on which the detection of the components is based changes only slightly in spatial terms between the repeated detection of the angles in the event of slight movements of the identification transmitter in very short periods.

8. Method for authorizing the use of a motor vehicle according to one of the preceding claims, **characterized in that** the spatial components of the third electromagnetic field of the received third signal that are detected by the identification transmitter, the x, y and z components of the electromagnetic field, are largely those of the first Cartesian coordinate system.

9. Method for authorizing the use of a motor vehicle according to one of the preceding claims, **characterized in that** at least one first vector is computed from the x, y and z components of the first electromagnetic field of the received first signal that are detected by the identification transmitter and a second vector is computed from the x, y and z components of the second electromagnetic field of the received second signal that are detected by the identification transmitter, and these two vectors are used to compute the scalar product thereof.

10. Method for authorizing the use of a motor vehicle according to one of the preceding claims, **characterized in that** the scalar product is used to determine the angle between the two vectors by computation.

11. Method for authorizing the use of a motor vehicle according to one of the preceding claims, **characterized in that** the detected angle exceeds a predetermined threshold value of largely zero degrees, in particular a threshold value greater than 1 to 10 degrees, in particular 1 to 5 degrees.

12. Method for authorizing the use of a motor vehicle according to Claim 11, **characterized in that** the threshold value that is greater than zero degrees is increased as the distance of the identification transmitter from the motor vehicle decreases, wherein the distance is determined in particular by means of a propagation-time measurement between the signals that are interchanged between motor vehicle and identification transmitter.

13. Method for authorizing the use of a motor vehicle according to one of the preceding claims, **characterized in that** the first, second and third antennas each send at an identical or different frequency in the frequency range from 20 kHz to 140 kHz, in particular at approximately 125 kHz, in particular at staggered times.

14. Motor vehicle entry system for authorizing the use of a motor vehicle, having a first and a second antenna, a first computer and an identification transmitter, wherein the motor vehicle entry system is suitable for carrying out a method according to one of Claims 1-13.

15. Motor vehicle entry system for authorizing the use of a motor vehicle according to Claim 14, **characterized in that** the identification transmitter is a radio key or a smartphone, wherein the smartphone is in particular provided with an identification transmitter software application, such as a so-called app.

16. Motor vehicle entry system for authorizing the use of a motor vehicle according to Claim 15, **characterized in that** the identification transmitter is a smartphone provided with a computer chip, a radio motor vehicle key provided with a computer chip or a chip card having a computer chip.

17. Motor vehicle entry system for authorizing the use of a motor vehicle according to Claim 15 or 16, **characterized in that** the identification transmitter has a sensor to determine or detect an electromagnetic field and/or the components of the electromagnetic field that has been generated by one or more motor vehicle antennas in the area of the identification transmitter.

18. Engine immobilizer for authorizing the use of a motor vehicle, having a first and a second antenna, a first computer and an identification transmitter, wherein the engine immobilizer is suitable for carrying out a method according to one of Claims 1-13.

19. Motor vehicle having an engine immobilizer for authorizing the use of a motor vehicle, having a first and a second antenna, a first computer and an identification transmitter, wherein the motor vehicle is suitable for carrying out a method according to one of Claims 1-13

20. Computer program product for authorizing the use of a motor vehicle, comprising commands that prompt the vehicle entry system of Claim 14 to carry out the method steps according to one of Claims 1-13.

## Revendications

1. Procédé d'autorisation de l'utilisation d'un véhicule automobile, en particulier d'un véhicule automobile à deux ou quatre roues, qui comporte au moins une première et une deuxième antenne, la première antenne et la deuxième antenne étant spatialement espacées l'une de l'autre, au moyen d'un transmetteur d'identification portable qui comporte une antenne de transmetteur d'identification, le procédé comprenant les étapes suivantes :
- la première antenne de véhicule émet un premier signal qui est reçu par l'antenne du transmetteur d'identification,
- le transmetteur d'identification détermine au moins une des composantes spatiales du premier champ électromagnétique du premier signal reçu, notamment à l'aide d'un capteur de champ magnétique à résolution angulaire,
- la deuxième antenne de véhicule émet un deuxième signal qui est reçu par l'antenne du transmetteur d'identification,
- le transmetteur d'identification détermine au moins une des composantes spatiales du deuxième champ électromagnétique du deuxième signal reçu, notamment à l'aide du capteur de champ magnétique à résolution angulaire,
- un premier calculateur, notamment un calculateur du transmetteur d'identification, détermine, de manière répétée après l'écoulement d'un premier intervalle de temps prédéterminé, l'angle entre au moins la composante spatiale déterminée du premier champ électromagnétique du premier signal reçu et la composante spatiale du deuxième champ électromagnétique du deuxième signal reçu,
- le transmetteur d'identification détermine, de manière répétée après l'expiration d'un intervalle de temps prédéterminé, en particulier le premier intervalle de temps prédéterminé, l'intensité de champ d'au moins le premier champ électromagnétique du premier signal reçu et en particulier de manière répétée également l'intensité de champ du deuxième champ électromagnétique du deuxième signal reçu, la détermination des intensités de champ étant notamment réalisée à l'aide du premier calculateur,
- le transmetteur d'identification n'envoie un signal d'autorisation permettant d'autoriser l'utilisation du véhicule automobile au véhicule automobile que si les conditions suivantes sont réunies cumulativement :
- l'angle déterminé de manière répétée à l'expiration du premier intervalle de temps prédéterminé dépasse une valeur de seuil prédéterminée,
- l'angle déterminé de manière répétée augmente ou devient plus grand, et/ou
- l'intensité de champ, mesurée de manière répétée, du premier et/ou du deuxième champ électromagnétique augmente ou devient également plus grande.

2. Procédé d'autorisation de l'utilisation d'un véhicule automobile selon la revendication 1, **caractérisé en ce que**, dans le véhicule automobile, l'angle, déterminé et transmis au véhicule automobile, est pourvu de manière répétée d'un horodatage correspondant et est mémorisé pour former un modèle d'angle de référence destiné à être comparé à des modèles d'angle déterminés ultérieurement et pour fournir un signal d'autorisation permettant d'autoriser l'utilisation du véhicule automobile uniquement en cas de comparaison positive de modèles.

3. Procédé selon l'une des revendications précédentes, **caractérisé en ce que**, dans le véhicule automobile, l'intensité de champ, mesurée ou déterminée et transmise au véhicule automobile, est pourvue de manière répétée d'un horodatage correspondant et est mémorisée pour générer un modèle de champ de référence destiné à être comparé à des modèles d'intensité de champ déterminés ultérieurement et pour fournir un signal d'autorisation permettant d'autoriser l'utilisation du véhicule automobile uniquement en cas de comparaison positive de modèles.

4. Procédé d'autorisation de l'utilisation d'un véhicule automobile selon l'une des revendications précédentes, **caractérisé en ce que** l'intervalle de temps entre l'émission du premier signal par la première antenne de véhicule et l'émission du deuxième signal par la deuxième antenne de véhicule est choisi pour être temporellement si court, mais différent de zéro, que le transmetteur d'identification porté par le conducteur n'est pas dans une large mesure déplacé lorsque le conducteur s'approche du véhicule et donc la détermination de l'angle au moins entre la composante spatiale déterminée du premier champ électromagnétique du premier signal reçu et la composante spatiale déterminée du deuxième champ électromagnétique du deuxième signal reçu n'est pas dans une large mesure falsifiée ou inutilisable en raison du mouvement du conducteur ou du mouvement associé du transmetteur d'identification.

5. Procédé d'autorisation de l'utilisation d'un véhicule automobile selon l'une des revendications précédentes, **caractérisé en ce que** le véhicule automobile comporte une troisième antenne supplémentaire qui est espacée spatialement de la première et de la deuxième antenne et **en ce que** de manière analogue ou identique l'angle au moins entre la composante spatiale déterminée du premier champ électromagnétique du premier signal reçu et la composante spatiale déterminée du troisième champ électromagnétique d'un troisième signal émis par la troisième antenne et reçu par le transmetteur d'identification est déterminé.

6. Procédé d'autorisation de l'utilisation d'un véhicule automobile selon l'une des revendications précédentes, **caractérisé en ce que** les composantes spatiales, déterminées par le transmetteur d'identification, du premier champ électromagnétique du premier signal reçu sont les composantes x, y et z du champ électromagnétique d'un premier système de coordonnées cartésiennes.

7. Procédé d'autorisation de l'utilisation d'un véhicule automobile selon l'une des revendications précédentes, **caractérisé en ce que** les composantes spatiales, déterminées par le transmetteur d'identification, du deuxième champ électromagnétique du deuxième signal reçu sont les composantes x, y et z du champ électromagnétique dans une large mesure les composantes par référence au premier système de coordonnées cartésiennes, dans une large mesure parce que le système de coordonnées cartésiennes ou système de référence, sur la base duquel les composantes sont déterminées, ne change spatialement que légèrement dans de très courts intervalles de temps entre les déterminations répétées de l'angle en cas de légers mouvements du transmetteur d'identification.

8. Procédé d'autorisation de l'utilisation d'un véhicule automobile selon l'une des revendications précédentes, **caractérisé en ce que** les composantes spatiales, déterminées par le transmetteur d'identification, du troisième champ électromagnétique du troisième signal reçu, sont les composantes x, y et z du champ électromagnétique dans une large mesure celles du premier système de coordonnées cartésiennes.

9. Procédé d'autorisation de l'utilisation d'un véhicule automobile selon l'une des revendications précédentes, **caractérisé en ce qu'**au moins un premier vecteur est formé à partir des composantes x, y et z, déterminées par le transmetteur d'identification, du premier champ électromagnétique du premier signal reçu et un deuxième vecteur est formé à partir des composantes x, y et z, déterminées par le transmetteur d'identification, du deuxième champ électromagnétique du deuxième signal reçu et le produit scalaire de ces deux vecteurs est formé par calcul.

10. Procédé d'autorisation de l'utilisation d'un véhicule automobile selon l'une des revendications précédentes, **caractérisé en ce que** l'angle entre les deux vecteurs est déterminé par calcul à l'aide du produit scalaire.

11. Procédé d'autorisation de l'utilisation d'un véhicule automobile selon l'une des revendications précédentes, **caractérisé en ce que** l'angle déterminé dépasse une valeur de seuil prédéterminée qui est dans une large mesure de zéro degré, notamment une valeur de seuil supérieure à une valeur allant de 1 à 10 degrés, notamment de 1 à 5 degrés.

12. Procédé d'autorisation de l'utilisation d'un véhicule automobile selon la revendication 11, **caractérisé en ce que** la valeur de seuil, qui est supérieure à zéro degré, est augmentée à mesure que la distance entre le transmetteur d'identification et le véhicule diminue, la distance étant déterminée notamment par une mesure de temps de propagation entre les signaux échangés entre le véhicule et le transmetteur d'identification.

13. Procédé d'autorisation de l'utilisation d'un véhicule automobile selon l'une des revendications précédentes, **caractérisé en ce que** la première, la deuxième et la troisième antenne émettent chacune à des fréquences identiques ou différentes dans la gamme de fréquences allant de 20 kHz à 140 kHz, notamment à environ 125 kHz, en particulier en étant temporellement décalées.

14. Système d'accès à un véhicule permettant d'autoriser l'utilisation d'un véhicule automobile, ledit système comprenant une première et une deuxième antenne, un premier calculateur et un transmetteur d'identification, le système d'accès à un véhicule étant apte à mettre en œuvre un procédé selon l'une des revendications 1 à 13.

15. Système d'accès à un véhicule permettant d'autoriser l'utilisation d'un véhicule automobile selon la revendication 14, **caractérisé en ce que** le transmetteur d'identification est une clé radio ou un smartphone, le smartphone comprenant notamment une application logicielle de transmetteur d'identification, telle que ce que l'on appelle une appli.

16. Système d'accès à un véhicule permettant d'autoriser l'utilisation d'un véhicule automobile selon la revendication 15, **caractérisé en ce que** le transmetteur d'identification est un smartphone muni d'une puce informatique, une clé de véhicule radio munie d'une puce informatique ou une carte à puce munie d'une puce informatique.

17. Système d'accès à un véhicule permettant d'autoriser l'utilisation d'un véhicule automobile selon la revendication 15 ou 16, **caractérisé en ce que** le transmetteur de signal d'identification comporte un capteur destiné à déterminer ou identifier un champ électromagnétique et/ou les composantes du champ électromagnétique qui a été généré par une ou plusieurs antennes de véhicule dans la zone du transmetteur d'identification.

18. Dispositif anti-démarrage permettant d'autoriser l'utilisation d'un véhicule automobile, ledit dispositif comprenant une première et une deuxième antenne, un premier calculateur et un transmetteur d'identification, le dispositif anti-démarrage étant apte à mettre en œuvre un procédé selon l'une des revendications 1 à 13.

19. Véhicule automobile comprenant un dispositif d'immobilisation permettant d'autoriser l'utilisation d'un véhicule automobile, ledit véhicule comprenant une première et une deuxième antenne, un premier calculateur et un transmetteur d'identification, le véhicule étant approprié pour mettre en œuvre un procédé selon l'une des revendications 1 à 13.

20. Progiciel permettant d'autoriser l'utilisation d'un véhicule automobile, ledit progiciel comprenant des instructions amenant le système de véhicule selon la revendication 14 à exécuter les étapes de procédé selon l'une des revendications 1 à 13.
